# EUROPÄISCHE PATENTANMELDUNG

(11) **EP 1 160 388 A2**
(43) Veröffentlichungstag der Anmeldung: **05.12.2001**
(21) Anmeldenummer: 01112341.1
(22) Anmeldetag: 21.05.2001
(51) Int. Cl.: E04B 7/24

(54) **Vorgefertigtes Dach bzw. Dachmodul für ein Gebäude**

(30) Priorität: 27.05.2000 DE 10026349
(71) Anmelder: Schüller, Peter, 54570 Meisburg (DE)
(72) Erfinder: Schüller, Jakob, 54570 Meisburg (DE)
(74) Vertreter: Becker, Bernd, Dipl.-Ing.

(57) **Zusammenfassung**

Ein vorgefertigtes Dach bzw. ein Dachmodul (1) für ein Gebäude, welches aus zumindest zwei im Firstbereich (4) miteinander verbundenen Dachflächen (3) besteht, umfasst eine aus einer Traglattung (48) und einer Konterlattung (47) bestehende Gitterkonstruktion, auf der Dachplatten aufgebracht sind. Das Dach bzw. Dachmodul (1) ist als gesamtes Fertigbauteil aufklappbar ausgebildet. Dabei sind die mindestens zwei Dachflächen (3) im Firstbereich (4) durch ein Scharniergelenk (33,34) aus einem vollständig zusammengeklappten Zustand in einen in einem bestimmten Winkel (43) aufgespreizten Zustand schwenkbar miteinander verbunden. Das Dach bzw. Dachmodul (1) ermöglicht eine vollständige Vormontage, gegebenenfalls mit zusätzlichen Bauelementen (16), und ein einfaches und schnelles Aufsetzen auf ein Gebäude.

## Beschreibung

Die Erfindung bezieht sich auf ein vorgefertigtes Dach bzw. Dachmodul für ein Gebäude, welches aus zumindest zwei im Firstbereich miteinander verbundenen Dachflächen besteht, mit einer aus einer Trag- und Konterlattung bestehenden Gitterkonstruktion, auf der Dachplatten aufgebracht sind.

Dächer von Gebäuden werden in den unterschiedlichsten Ausführungsformen und Aufbauvarianten hergestellt. Aus der DE 39 05 927 A1 ist ein zerlegbares Holzhaus aus vormontierten Wand- und Dachbaugruppen bekannt, wobei neben den Wandbaugruppen das Dach als starre Baugruppe montiert wird. Durch übliche Verbindunsgelemente, wie Verbinder, Schrauben und dergleichen, wird die Dachbaugruppe mit den vormontierten Wänden verbunden.

Des Weiteren ist es aus der DE 299 11 633 U1 bekannt, eine Raumzelle aus im allgemeinen zusammen passbaren Modulen gleicher Bemaßung herzustellen, zu denen Boden- und Wandmodule sowie passgenaue Zubehörteile, wie dreickförmige Giebel, Traufleisten, Firstholz sowie Dachplatten usw., gehören. Hierbei sind die Dachbaugruppen im wesentlichen auf die übrigen Baugruppen, wie Wandmodule, maßlich abgestimmt, wodurch Gebäude anderer Abmessungen und Formen nicht durch die Module abgedeckt werden können.

Die DE 38 08 858 A1 offenbart ein tragendes Dachelement für den Hochbau, welches werkseitig vollständig vorgefertigt ist. Das bedeutet, dass in die Dachfläche z.B. eine Feuchtigkeitssperre und eine Wärmedämmung schon herstellerseitig eingebracht werden.

Des weiteren zeigt die DE 34 15 693 A1 eine Satteldachkonstruktion. Diese umfasst für die Dacheindeckung eine Vielzahl von Dachlatten bzw. eine Dachschalung sowie eine mittragende Verkleidung als Unterkonstruktion aus vorgefertigten Dachelementen, die durch Gelenke miteinander verbunden und zu einem einer Parabelform angenäherten Polygonzug zusammen gesetzt sind. Über dieser gelenkigen Unterkonstruktion wird das eigentliche Satteldach aufmontiert. Dadurch erreicht das zu montierende Dach einen hohen Material- und Kostenaufwand. Der polygonartige Unterkonstruktionszug erfordert darüber hinaus eine Vielzahl von Gelenken zwischen den einzelnen Dachelementen, so dass dieses Satteldach naturgemäß eine Vielzahl von Schwachstellen in statischer Hinsicht aufweist. Das eigentliche Satteldach besteht in üblicher Weise aus zwei zueinander geneigten Dachflächen, die an ihrem Firstbereich starr miteinander verbunden sind.

Schließlich ist aus der DE 297 08 608 U1 ein industriell gefertigtes Haus in modularer Bauweise mit aufklappbarem Dach bekannt. Unter aufklappbarem Dach ist hierbei zu verstehen, dass die Dachsparren jeweils für sich beim Aufstellen der an sich starren Dachkonstruktion mittels eines Gelenkbolzens im Traufbereich des Daches befestigt werden. Nach dem Aufstellen der Sparrenkonstruktion werden die Sparren mittels Traufgelenkplatten starr mit der Decke des Gebäudes verbunden. Das Traufgelenk ist dabei starres Verbindungsmittel zwischen Sparren und Gebäudedecke. Darüber hinaus wird im Firstbereich des Daches die starre Befestigung des Dachfirstes mit der Dachfläche ausgeführt.

Es ist Aufgabe der Erfindung, ein vorgefertigtes Dach bzw. Dachmodul für ein Gebäude der eingangs genannten Art zu schaffen, das eine vollständige Vormontage, gegebenenfalls mit zusätzlichen Bauelementen, und ein einfaches und schnelles Aufsetzen auf ein Gebäude ermöglicht.

Erfindungsgemäß wird die Aufgabe dadurch gelöst, dass das Dach bzw. Dachmodul als gesamtes Fertigbauteil aufklappbar ausgebildet ist, wobei die mindestens zwei Dachflächen im Firstbereich durch ein Scharniergelenk aus einem vollständig zusammengeklappten Zustand in einen in einem bestimmten Winkel aufgespreizten Zustand schwenkbar miteinander verbunden sind.

Sonach gestattet die erfindungsgemäße Maßnahme in vollem Umfange eine Vormontage des gesamten Daches eines Gebäudes oder eines oder mehrerer Dachmodule. Zum Zwekke der Montage des Daches bzw. Dachmoduls wird dieses mittels eines Hebezeuge, beispielsweise eines Krans, einfach auf die Decke des Gebäudes aufgesetzt. Hierfür ist an der Traglattung und/oder der Konterlattung jeder Dachfläche eine Einrichtung zur Aufhängung an ein Hebezeug angebracht. Die Einrichtung zur Aufhängung eines Hebezeuges können vorzugsweise eine Mehrzahl von Tragösen sein, die verteilt an den Dachsparren angebracht sind. Das Dach bzw. Dachmodul wird am Aufstellort des Gebäudes vollständig zusammengeklappt und gegebenenfalls durch eine Transportsicherung, z.B. einer Klammer oder ein Halteband, im zusammengeklappten Zustand gehalten. Durch die Tragösen wird ein Tragseil geführt, welches an einem Tragebalken eines Krans befestigt wird. Nun wird das Dach bzw. Dachmodul durch den Kran angehoben und über der Decke des Gebäudes positioniert. Nach dem Entfernen der Transportsicherung wird das Dach bzw. Dachmodul abgesenkt. Dabei klappen die im Firstbereich miteinander verbundenen Dachflächen um das Scharniergelenk auf und gehen in einem bestimmten Winkel in den aufgespreizten Zustand über. Dadurch kann das Dach bzw. Dachmodul passgenau auf die Decke des Gebäudes abgesetzt werden. Danach erfolgt die Arretierung des Daches bzw. Dachmoduls in üblicher Weise.

Nach einer Weiterbildung des erfindungsgemäßen Daches bzw. Dachmoduls besteht die Traglattung der Dachfläche aus einer Mehrzahl von beabstandeten Sparren, die im Traufbereich mit an der Decke eines Gebäudes befestigten Fußpfetten verbindbar sind. Die Verbindung der Dachsparren im Traufbereich mit den Fußpfetten bewirkt eine feste Verbindung des Daches bzw. Dachmoduls mit dem Gebäude.

Bei einer weiteren Ausgestaltung der Erfindung sind die Sparren der Traglattung jeder Dachfläche im Firstbereich jeweils mit einem Firstbohlen verbunden, wobei die aneinander grenzenden Firstbohlen jeder Dachfläche durch das Scharniergelenk miteinander verbunden sind. Dabei sind die Firstbohlen im zusammengeklappten Zustand der miteinander verbundenen Dachflächen in einer derart geneigten Weise zueinander angeordnet, dass diese einen bestimmten Winkel zueinander bilden, der im wesentlichen dem maximalen Aufklappwinkel der miteinander verbundenen Dachflächen entspricht, wobei die Firstbohlen im aufgespreizten Zustand in gegenseitige Anlage gelangen. Der maximale Aufklappwinkel der miteinander verbundenen Dachflächen ergibt sich aus dem Winkel, den das Satteldach bei Fertigstellung des Gebäudes haben soll. Dabei wird das Aufklappen des Daches bzw. Dachmoduls durch die gegenseitige Anlage der Firstbohlen begrenzt.

Bevorzugt bei Gebäuden, die ein Satteldach aufweisen sollen, ist das Dach bzw. Dachmodul zwischen beabstandeten Wandwangen des Gebäudes positioniert. Die Wandwangen werden in der Regel durch die meistens schmaleren Gebäudeseiten gebildet.

In Abhängigkeit von der Gestaltung des Gebäudedaches kann dieses zusätzliche Bauelemente aufweisen. Das Dach bzw. Dachmodul kann insbesondere mit einem Dachfenster und/oder einer Gaube und/oder einer Trempelwand ausgerüstet werden.

Gemäß einer vorteilhaften Ausgestaltung sind das Dachfenster und/oder der Gaubenrahmen der Gaube und/oder die Trempelwand ausklappbar von der Dachfläche ausgebildet. Dadurch können Dachfenster, Gauben und Trempelwände bereits vorgefertigt in das Dach bzw. Dachmodul integriert werden und sind damit Bestandteil des Montagevorganges des Gebäudedaches.

Besonders vorteilhaft sind die Gaubendachelemente der Gaube vom Gaubenrahmen und/oder der Dachfläche ausklappbar ausgebildet. Bei der Montage des Daches bzw. Dachmoduls werden die Gaubendachelemente einfach vom Gaubenrahmen bzw. von der Dachfläche heraus geklappt und gegenseitig durch übliche Befestigungselemente, wie Schrauben, Nägel, Verbinder usw., zueinander arretiert.

Eine weitere Ausgestaltung der Erfindung besteht darin, dass das Dach bzw. Dachmodul mit regenerativen Energieerzeugungssystemen bestückt ist. Dies Energieerzeugungssysteme werden ebenfalls vor der Montage in das Dach bzw. Dachmodul eingebracht und in den Montagevorgang einbezogen. Insbesondere kann das Dach bzw. Dachmodul auf seiner Außenseite mit einer oder mehreren Solarzelleneinheiten versehen werden. Gleichzeitig kann beispielsweise ein Wärmepumpensystem in das Dach bzw. Dachmodul eingebaut werden, welches nach der Montage mit den entsprechenden Versorgungsverbindungen des Gebäudes gekoppelt wird.

Darüber hinaus kann das Dach bzw. Dachmodul mit einer Beplankung und einer Bespannung sowie mit einer Wärmedämmung und einer Dampfsperre versehen werden, die ebenfalls in die Vorfertigung und später in den Montagevorgang einbezogen werden.

Schließlich kann die Vorfertigung des Daches bzw. Dachmoduls auch dadurch ergänzt werden, dass diese mit einer Dachbegrünung versehen sind.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Der der Erfindung zugrunde liegende Gedanke wird in der nachfolgenden Beschreibung anhand von Ausführungsbeispielen, die in den Zeichnungen dargestellt sind, näher erläutert. Es zeigen:
- Fig. 1:: eine perspektivische Ansicht auf ein erfidungsgemäßes Klappdach,
- Fig. 2:: eine perspektivische Ansicht auf ein Dach mit zwei nebeneinander aufgelegten, erfindungsgemäßen Klappdachmodulen,
- Fig. 3:: eine Seitenansicht auf ein an einem Kran hängendes, gesichertes Klappdach,
- Fig. 4:: eine Seitenansicht auf ein am Kran hängendes, in Auflegstellung befindliches Klappdach,
- Fig. 5:: einen Schnitt durch das Gebäude gemäß Fig. 2 in der Schnittebene V,
- Fig. 6:: einen Schnitt durch das Klappdach gemäß Fig. 5 im zusammengeklapptem Zustand,
- Fig. 7:: eine Teilansicht in Pfeilrichtung VII auf den Gaubenbereich des Klappdaches gemäß Fig. 6,
- Fig. 8:: eine alternative Ausgestaltung gemäß Fig. 7,
- Fig. 9:: eine vergrößerte Darstellung der Einzelheit IX gemäß Fig. 5,
- Fig. 10:: eine vergrößerte Darstellung der Einzelheit X gemäß Fig. 5,
- Fig. 11:: eine vergrößerte Darstellung der Einzelheit XI gemäß Fig. 5,
- Fig. 12:: eine vergrößerte Darstellung des Schnittes XII-XII gemäß Fig. 2 in einer alternativen Ausgestaltung und
- Fig. 13:: eine alternative Bestückung eines erfindungsgemäßen Klappdaches.

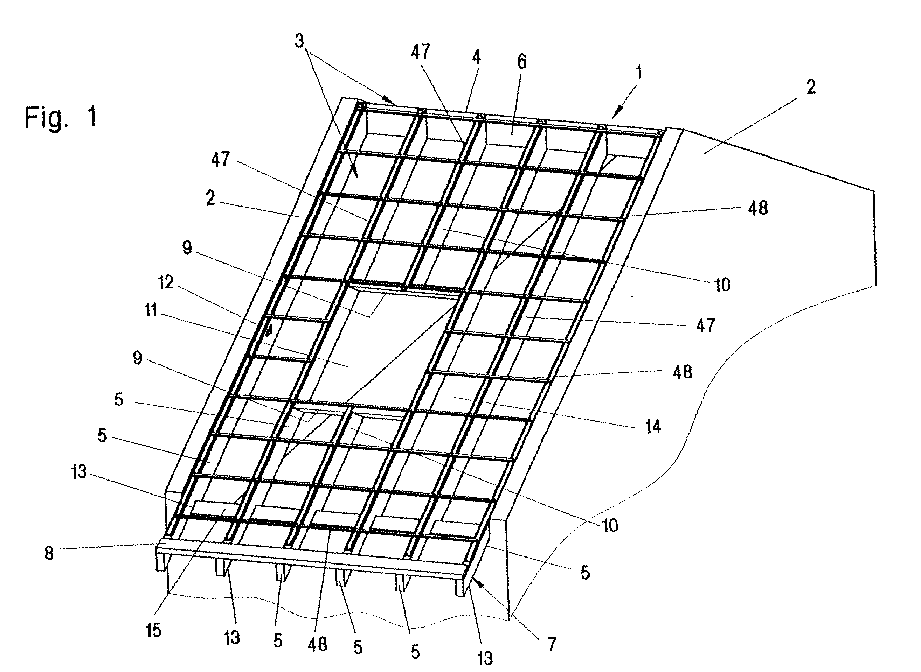

Bei dem in der Fig. 1 dargestellten Dach ist ein Klappdachmodul 1 als Teil eines Gebäudedaches paßgenau zwischen zwei Wandwangen 2 eingesetzt. Das Klappdachmodul 1 besteht aus zwei Dachflächen 3, welche im Firstbereich 4 gelenkig miteinander verbunden sind. Jede Dachfläche 3 weist eine Mehrzahl von Sparren 5 auf, die im Firstbereich 4 mit einem Firstbohlen 6 und im Traufbereich 7 mit einem Traufbrett 8 verbunden sind. Ein Sparren 5 ist über eine bestimmte Länge ausgeklinkt. Mittels zwei Gaubenwechseln 9 sind die verbliebenen Sparrenstücke 10 des ausgeklinkten Sparrens 5 gehaltert. In das dadurch gebildete Dachflächenloch 11 wird ein Dachflächenfenster eingebaut.

An jedem der äußeren Sparren 5 ist eine Tragöse 12 angeschraubt, über die das Klappdachmodul 1 mit einem Kran angehoben und positioniert werden kann. In der dargestellten Perspektive ist nur eine Tragöse 12 sichtbar. Die restlichen drei sind jeweils symmetrisch bzw. spiegelbildlich dazu angebracht.

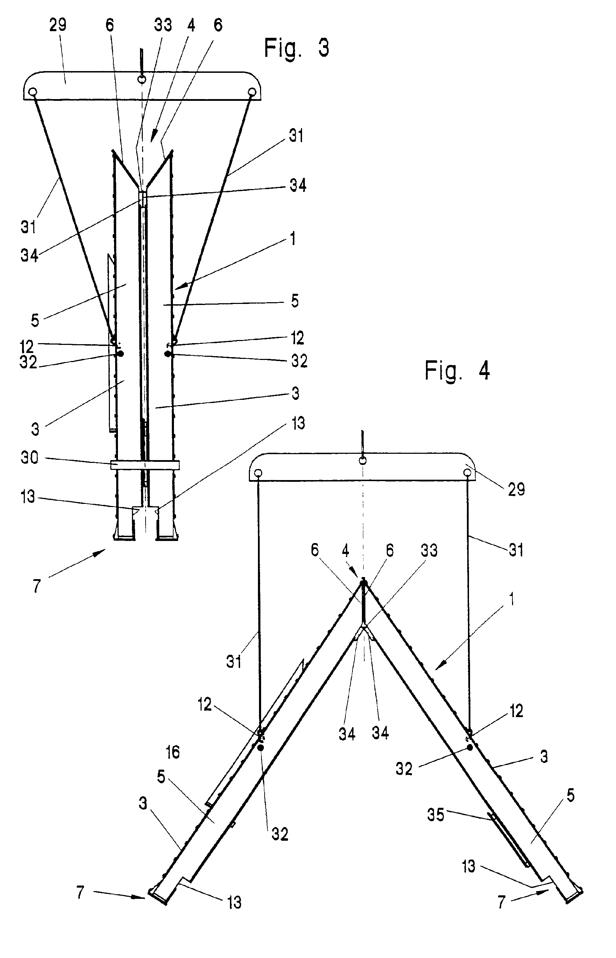

Jeder Sparren 5 besitzt im Traufbereich 7 eine Ausklinkung 13, welche passgenau auf eine auf der Decke 14 eines Gebäudes befestigte Fußpfette 15 passt. Das Klappdachmodul 1 stützt sich somit beidseitig auf den Fußpfetten 15 ab. Im Firstbereich 4 kommen dabei die Firstbohlen 6 in Anlage und begrenzen das weitere Aufklappen des Klappdachmoduls 1, wobei die Dachflächen 3 über Modulscharniere 33 gemäß den Fig. 3 und 4 im Firstbereich 4 miteinander verbunden sind.

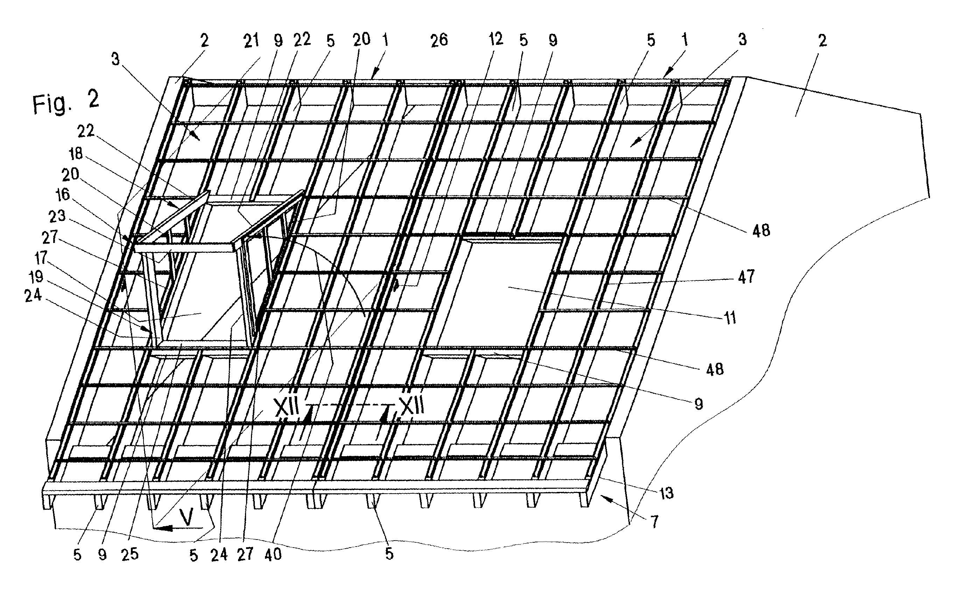

Jedes Klappdachmodul 1 wird einbaufertig hergestellt und weist sowohl eine nicht dargestellte Wärmedämmung, eine Dampfsperre als auch eine Beplankung auf. Aus Gründen der Vereinfachung sind bei den in Fig. 1 und 2 sichtbaren Dachflächen 3 nur noch die Konterlattung 47 und die Traglattung 48 eingezeichnet.

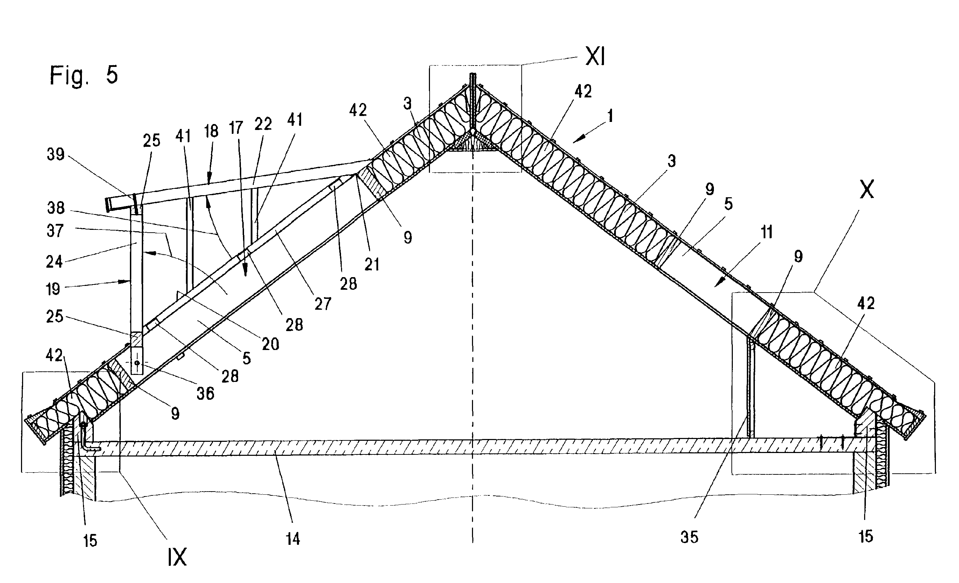

Bei dem in Fig. 2 gezeigten Dach eines Gebäudes sind zwischen zwei Wandwangen 2 zwei Klappdachmodule 1 aufgelegt. Das vordere Klappdachmodul 1 ist entsprechend Fig. 1 ausgebildet. Das hintere Klappdachmodul 1 besitzt eine Gaube 16. Dafür ist das Dachflächenloch 11 länger ausgebildet und stellt das Gaubenloch 17 dar. Die Gaube 16, welche ein einflächiges Dach aufweist, besteht aus dem Gaubendachelement 18, dem Gaubenrahmen 19 und den Gaubenwangen 20. Das Gaubendachelement 18 besteht aus den Gaubensparren 22 und einem die Gaubensparren 22 verbindenden Gaubenbrett 23 und ist über ein Dachscharnier 21 am Gaubenwechsel 9 befestigt. Der Gaubenrahmen 19 besitzt zwei senkrechte Gaubenbalken 24, die mit zwei dazwischen angeordneten Querbalken 25 verbunden sind. Einer der Querbalken 25 liegt im Bereich des Gaubendachelementes 18 und ist hier nicht sichtbar. Der andere Querbalken 25 liegt im Bereich des unteren Gaubenwechsels 9. Die Gaubenwangen 20 bestehen aus dem Rahmen 26, dessen Basis 27 über Wangenscharniere 28, wie in Fig. 5 dargestellt, mit dem Sparren 5 der Dachfläche 3 verbunden ist. Alle die Gaube 16 bildenden Elemente sind gelenkig an der Dachfläche 3 angelenkt. Die Dachflächen 3 stoßen im Bereich der äußeren Sparren 5 stumpf gegeneinander.

Die Fig. 3 und 4 zeigen ein Klappdachmodul 1 am Tragebalken 29 eines Kranes. Eine Transportsicherung 30 gemäß Fig. 3 hält einerseits am freien Ende des Klappdachmodules 1 die Dachflächen 3 zusammen. Andererseits ist im Firstbereich 4 auf der Innenseite der Sparren 5 jeweilsein diese überbrückender Scharnierbohlen 34 angebracht. An den Scharnierbohlen 34 der gegenüberliegenden Dachflächen 3 sind die Modulscharnier 33 angeschraubt, mit denen die Dachflächen 3 im Firstbereich 4 miteinander verbunden sind. Dem Firstbereich 4 gegenüber liegt der Traufbereich 7, in dem die Sparren 5 auf der Innenseite die Ausklinkung 13 aufweisen.

Das Klappdachmodul 1 wird über Tragseile 31, die an den Tragösen 12 und dem Tragbalken 29 befestigt sind angehoben, wobei das hängende Klappdachmodul 1 nicht aufklappen kann. Die Tragösen 12 sind geringfügig unter dem Schwerpunkt 32 einer jeden Dachfläche 3 montiert, wodurch sich nach dem Entfernen der Transportsicherung 30 der in Fig. 4 gezeigte, aufgeklappte Zustand des Klappdachmoduls 1 ergibt. Dabei kommen die Firstbohlen 6 im Firstbereich 4 in Anlage gegeneinander, so dass das weitere Umklappen verhindert wird.

In den Fig. 3 und 4 sind auf der Außenseite der linken Dachfläche 3 Teile der Gaube 16 ersichtlich und auf der Innenseite der rechten Dachfläche 3 ist eine an die Dachfläche 3 beigeklappte Trempelwand 35 dargestellt.

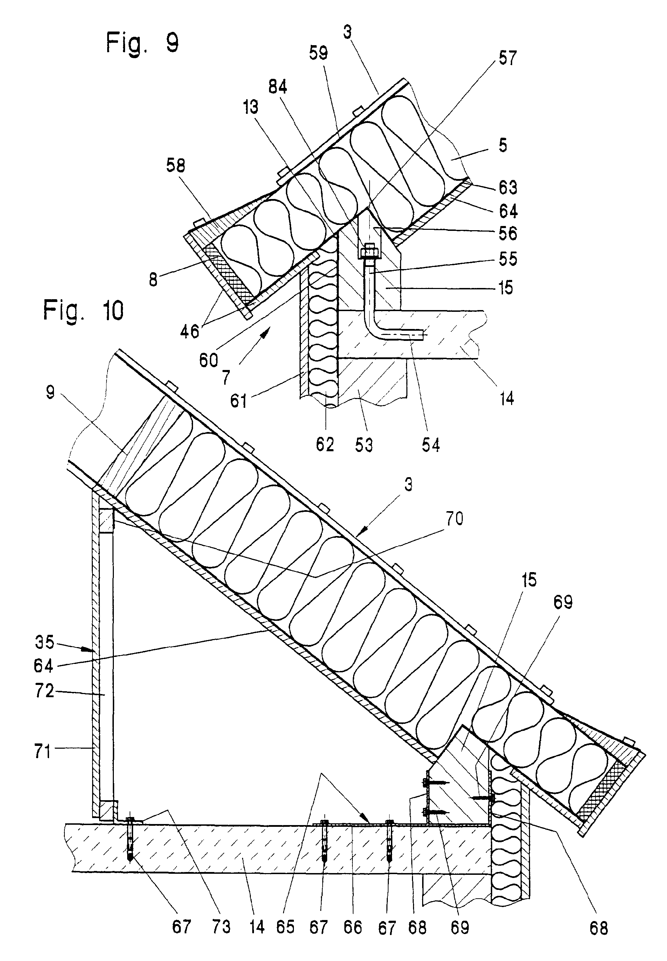

Fig. 5 zeigt einen Schnitt durch ein fertig montiertes Klappdachmodul 1. Die Befestigung des Klappdachmoduls 1 ist auf den beiden, an der Decke 14 des Gebäudes gehalterten Fußpfetten 15 unterschiedlich ausgeführt und wird nachfolgend in Bezug auf die Fig. 9 und 10 ausführlich beschrieben. Die Dachfläche 3 auf der rechten Seite besitzt ein Dachflächenloch 11 zwischen den Sparren 5 und den Gaubenwechseln 9. Auf der Höhe des unteren Gaubenwechsels 9 ist die Trempelwand 35 an der Dachfläche 3 drehbar befestigt. In die Dachfläche 3 auf der linken Seite des Klappdachmoduls 1 ist ein Gaubenloch 17 zwischen den Sparren 5 und den Gaubenwechseln 9 eingearbeitet. Im Gaubenloch 17 ist der Gaubenrahmen 19 im Drehpunkt 36 drehbar gehaltert. Im Drehpunkt 36 sind ein Rohr, ein Gewindebolzen mit entsprechenden Muttern und Fixiersplinte vorhanden. Der Gaubenrahmen 19 wird um den Drehpunkt 36 gemäß dem Pfeil 37 in die dargestellte Endlage verschwenkt. Zuvor wird das Gaubendachelement 18 um sein am Gaubenwechsel 9 angeschraubtes Dachscharnier 21 gemäß dem Pfeil 38 geringfügig über seine Endlage verschwenkt und dann auf dem Gaubenrahmen 19 aufgelegt und mit Nägeln 39 fixiert. Die Gaubenwangen 20, welche beim Transport außen auf der Dachfläche 3 aufliegen, werden gemäß Pfeil 40 in Fig. 2 um ihre Wangenscharniere 28 hochgeklappt. Jede Gaubenwange 20 ist mit Latten 41 ausgesteift und vor dem Aufbau des Klappdachmodules 1 bereits fertig beplankt, was aus Gründen der Vereinfachung nicht gezeigt ist. Auch die Dachflächen 3 sind bereits fertig beplankt bzw. mit nicht gezeigten Unterspannbahnen und Belattung versehen. Die Zwischenräume zwischen den Sparren 5 sind mit Dämmmaterial 42 ausgekleidet.

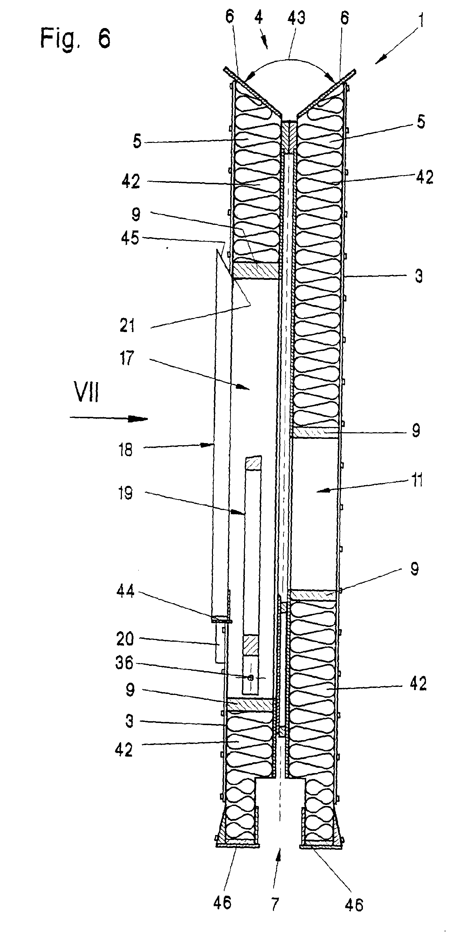

Das zusammengeklappte Klappdachmodul 1 ist in Fig. 6 dargestellt. In der rechten Dachfläche 3 ist das Dachflächenloch 11 und in der linken Dachfläche das Gaubenloch 17 vorhanden. Das Dachflächenloch 11 bzw. das Gaubenloch 17 sind nach oben und unten durch je einen Gaubenwechsel 9 begrenzt. Der darüber und darunter liegende Zwischenraum ist zwischen der Beplankung und der Bespannung mit Dämmmaterial 42 ausgekleidet. Im Firstbereich 4 ist je ein Firstbohlen 6 an den Sparren 5 befestigt. Der freie Winkel 43 zwischen den Firstbohlen 6 legt den Winkel für das Klappdachmodul 1 fest. Im Gaubenloch 17 bzw. davor liegt der Gaubenrahmen 19 bzw. das Gaubendachelement 18 sowie auf der Dachfläche 3 dahinter die Gaubenwange 20. Das Gaubendachelement 18 ist an seinem freien Ende bereits mit einer Untersichtverkleidung 44 versehen, welche über die gesamte Breite des Gaubendachelementes 18 reicht. Das Gaubendachelement 18 ist über das Dachscharnier 21 am Dachelement 3 befestigt, wobei die Abschrägung 45 den Aufklappwinkel des Gaubendachelementes 18 begrenzt. Jede Dachfläche 3 besitzt im Traufbereich 7 eine Traufsichtverkleidung 46.

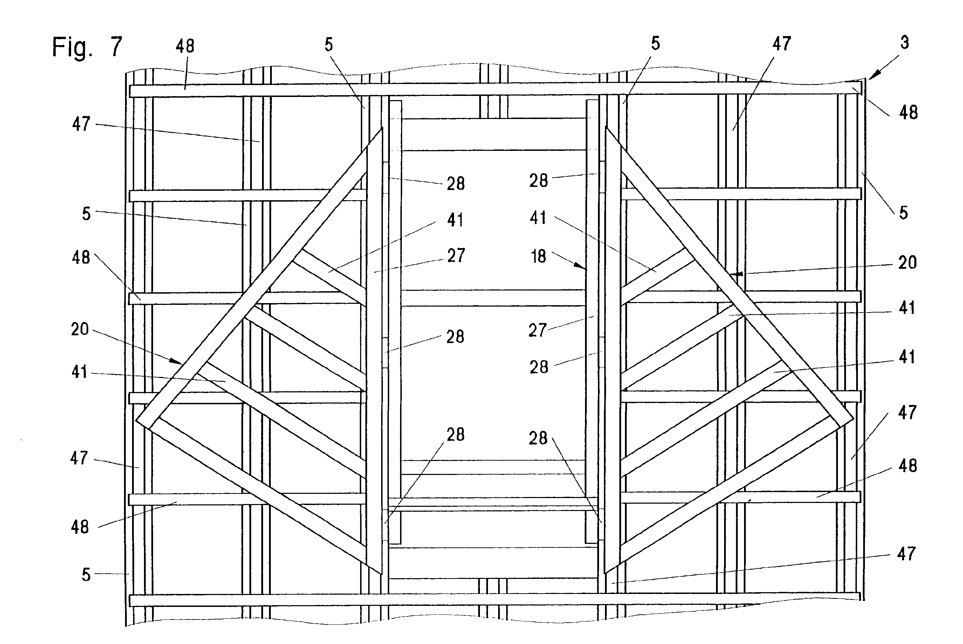

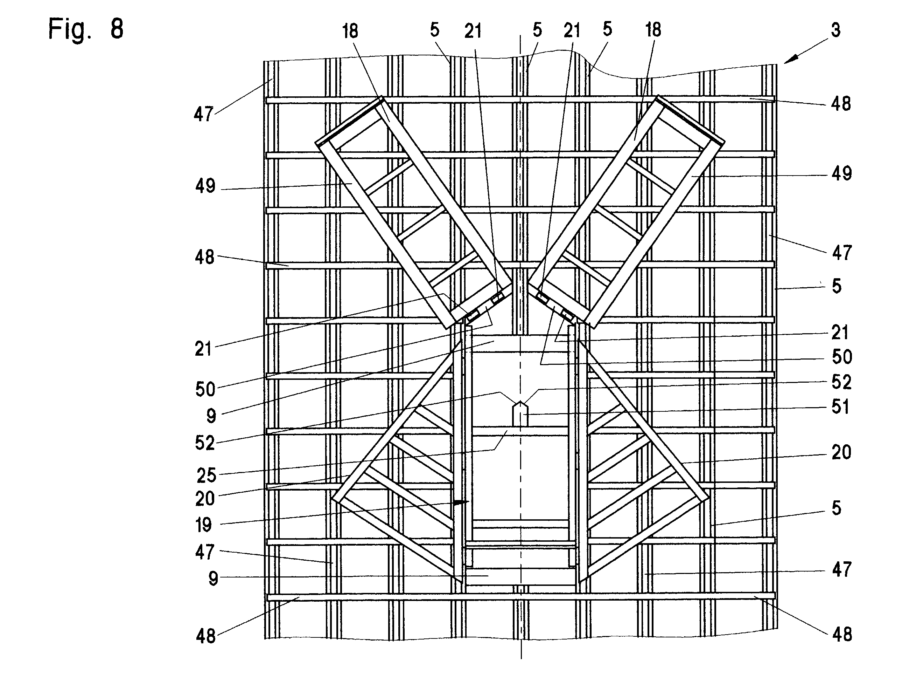

In den Fig. 7 und 8 ist die Ansicht auf jeweils ein Dachelement 3 gezeigt. Das Gaubendachelement 18 gemäß Fig. 7 ist flach ausgebildet. Die mit ihrer Basis 27 am Sparren 5 über drei Wangenscharniere 28 befestigte, mit Latten 41 versteifte Gaubenwange 20 liegt flach auf der Traglattung 48 auf. Nach dem Aufklappen des Gaubendachelementes 18, des Gaubenrahmens 19 und der Gaubenwangen 20 sind diese passgenau zueinander aufgerichtet und werden mit Nägeln bzw. Schrauben verbunden. Das Gaubendachelement 18 gemäß Fig. 8 besitzt die Form eines Satteldaches. Um diese Ausbildung zu ermöglichen, sind zwei Satteldachhälften 49 an Schrägsparren 50 über Dachscharniere 21 befestigt, wobei die Schrägsparren 50 zwischen den Sparren 5 gehaltert sind. Am Gaubenrahmen 19 ist auf dem oberen Querbalken 25 ein Ständer 51 mittig aufgebracht, der je zwei Schrägen 52 für die Auflage jeder der Satteldachhälften 49 besitzt.

Gemäß Fig. 9 liegt die Fußpfette 15 auf der Decke 14 des Gebäudes auf, die wiederum auf einer Außenwand 53 des Gebäudes aufliegt. In die Decke 14 ist ein Bolzen 54 eingegossen, der mit einem Gewindebolzen 55 senkrecht aus der Decke 14 herausragt. In der Fußpfette 15 ist eine Sackbohrung 56 eingebracht, in der eine Mutter 84 einliegt, die beim Andrehen die Fußpfette 15 mit der Decke 14 verspannt. Bei einer schrägen Decke 14 wird durch Zwischenlage von nicht dargestellten Keilen oder Abstandshaltern zwischen der Decke 14 und der Fußpfette 15 ein Höhenausgleich ermöglicht. In den Sparren 5 der Dachfläche 3 ist die Ausklinkung 13 eingearbeitet, deren Höhe über den gesamten Traufbereich 7 verläuft. Die Fußpfette 15 besitzt, den Sparren 5 zugeordnet, eine Spitze 57, die der Form der Ausklinkung 13 angepasst ist. Gegenüber ist am Ende der Sparren 5 die Trauflüftungskammer 58 zur vorschriftsmäßigen Belüftung des Klappdachmodules 1 vorhanden. Jede Dachfläche 3 ist oben und unten mit einer Unterspannbahn 59 bzw. mit einer Dampfsperrfolie 63 versehen. Eine Folie 60 verläuft von der Spitze 57 der Fußpfette 15 bis mindestens in den Bereich der Decke 14. Am freien Ende besitzt die Dachfläche 3 die Traufsichtverkleidung 46, die bis kurz vor die Fußpfette 15 reicht. Die Traufsichtverkleidung 46 wird einerseits am Traufbrett 8 und andererseits in der Ausklinkung 13 an den Sparren 5 befestigt. Eine vor der Außenwand 53 angebrachte Verkleidung 61 mit Dämmplatten 62 deckt sowohl die Fußpfette 15 als auch die Ausklinkung 13 bis kurz über die Traufsichtverkleidung 46 ab. Auf den Innenflächen der Dachflächen 3 ist auf der Dampfsperrfolie 63 eine Fermacellplatte 64 angeschraubt, wodurch der Innenausbau im Dachbereich abgeschlossen ist.

In Fig. 10 ist die Fußpfette 15 mittels eines Pfettenschuhes 65 gehaltert. Der Pfettenschuh 65 weist eine lange Basisplatte 66 auf, die in den freien Bereich der Decke 14 reicht und mittels Dübelbefestigung 67 festgelegt ist. Von der Basisplatte 66 ragen zwei Schenkel 68 auf, zwischen denen die Fußpfette 15 einliegt. An den Schenkeln 68 wird die Fußpfette 15 mittels Holzschrauben 69 festgezogen. Selbstverständlich kann auch hierbei vorher ein Höhenausgleich, wie vorbeschrieben, durchgeführt werden.

Im Bereich des Gaubenwechsels 9 ist über ein Trempelscharnier 70 die Trempelwand 35 angeschraubt. Die Trempelwand 35 besteht aus einem mit einer Verkleidungsplatte 71 versehenen Trempelrahmen 72. Selbstverständlich sind in der Trempelwand 35 auch Revisionstüren vorhanden. Die Befestigung des Trempelrahmens 72 an der Decke 14 erfolgt über Rahmenwinkel 73 mittels Dübelbefestigung 67. Die Trempelwand 35 ist so bemessen, dass zwischen dem Trempelrahmen 35 und der Decke 14 bei heruntergeklappter Trempelwand 35 ein ca. 3 cm breiter Luftspalt vorhanden ist.

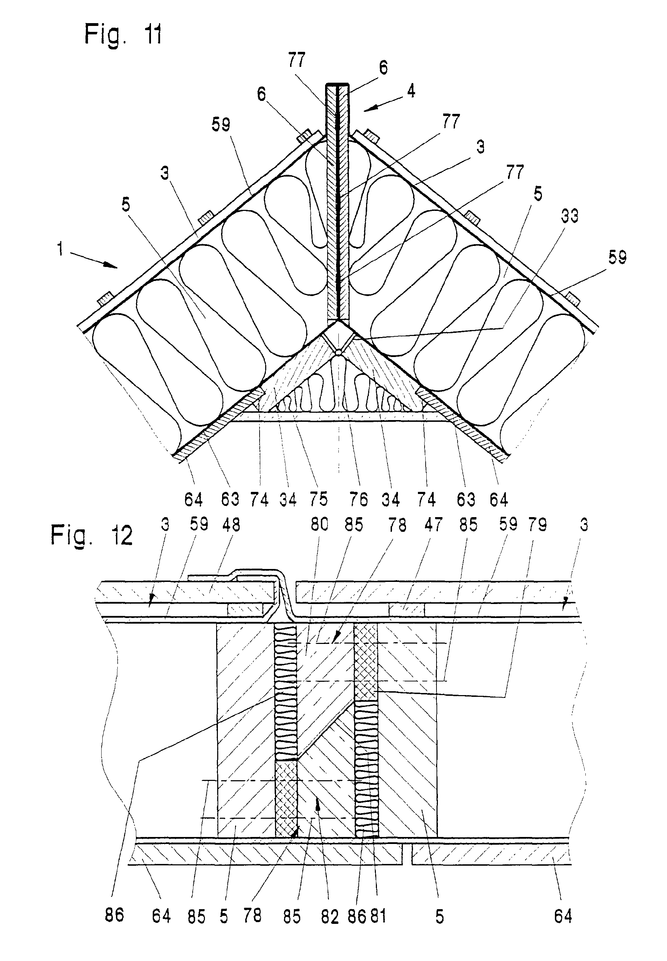

Der Firstbereich 4 ist in Fig. 11 vergrößert dargestellt. Die Sparren 5 sind im Winkel des Klappdachmodules 1 zugeschnitten und tragen die Firstbohlen 6, welche nach außen überstehen und zur Befestigung eines nicht dargestellten Firstziegels dienen. Innen im Eckbereich ist an den Sparren 5 jeder Dachfläche 3 ein Scharnierbohlen 34 angeschraubt. Jeder Scharnierbohlen 34 besitzt eine Ausfräsung 74 zur Aufnahme der Fermacellplatte 64. Gegenüber ist das Modulscharnier 33 befestigt, über welches die Dachflächen 3 geklappt werden. Der innere Winkel zwischen den Dachflächen 3 ist mit einem Firstbrett 75 verkleidet, hinter dem sich eine Firstdämmung 76 verbirgt. Sowohl die Dampfsperrfolie 63 als auch die Unterspannbahn 59 verlaufen bis über die Vorderfront der Firstbohlen 6. Drei dampfdichte parallel verlaufende Klebebänder 77 auf den zueinander zugewandten Seiten der Firstbohlen 6 verkleben diese beim Auseinanderklappen der Dachflächen 3.

Fig. 12 zeigt eine alternative Stoßausführung 82 im Bereich angrenzender Dachflächen 3, die in der Form eines Keilverschlusses ausgeführt ist. Jede Dachfläche 3 besitzt eine Überlappung 78, wobei die Überlappungen 78 gegeneinander ausgerichtet sind. Bei jeder Überlappung 78 ist am Sparren 5 ein Distanzbrett 79 vorhanden, an dem sich ein Dichtsparren 80 anschließt. Der Dichtsparren 80 besitzt zur Außenseite eine Abschrägung 81, die sich nach der zugehörigen Dachfläche verjüngt. Beim Aufeinanderlegen der Dachflächen 3 kommen die Abschrägungen 81, die sich nach der zugehörigen Dachfläche verjüngt. Beim Aufeinanderlegen der Dachflächen 3 kommen die Abschrägungen 81 aufeinander zu liegen und ichten die Stoßausführung 82 ab, wobei durch die Abschrägungen 81 die Dachflächen 3 zusammen gezogen -werden. Der Dichtsparren 80 und das Distanzbrett 79 sind über Verschraubungen 85 an den Sparren 5befestigt. Der freie Bereich zwischen den Sparren 5 und den Dichtsparren 80 der gegenüberliegenden Dachflächen 3 ist mit Verschlußdämmung 86 ausgefüllt. Im Außenbereich ist die Unterspannbahn 59 auf der Konterlattung 47 bzw. auf der Traglattung 48 abdichtend überlappend befestigt.

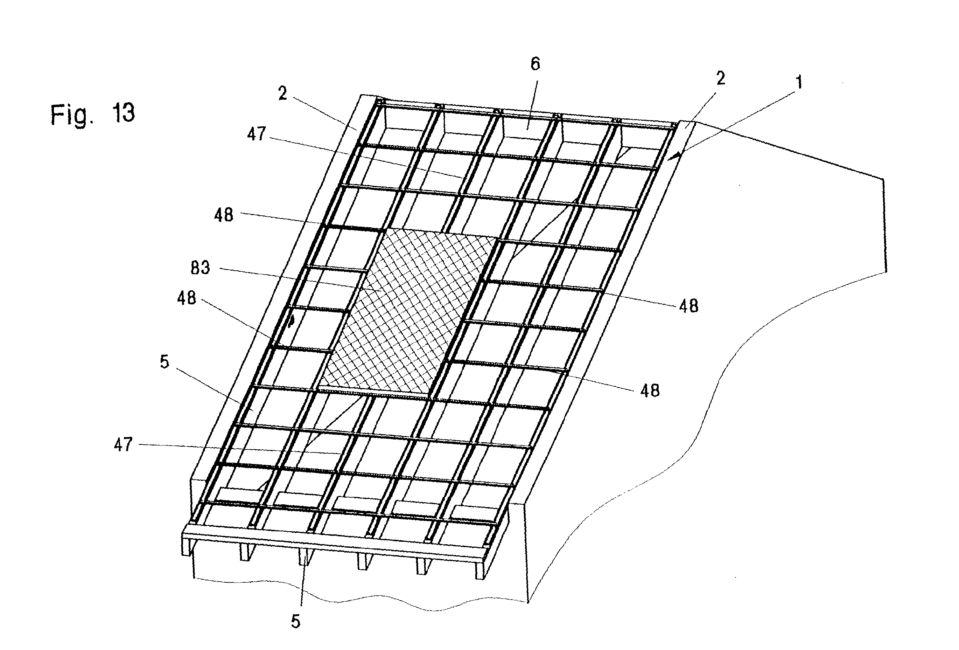

Bei dem Klappdachmodul 1 gemäß Fig. 13 ist auf der Dachfläche 3 eine Solarzelleneinheit 83 eingebaut. Die Solarzelleneinheit 83 ist sowohl in der Breite als auch in der Länge an die zur Eindeckung verwendeten Dachziegel eingepaßt. Unter der Solarzelleneinheit 83 verlaufen die Sparren 5 weiter. Lediglich die Konterlattung 47 und die Traglattung 48 sind unterbrochen. Die Anschlüsse für die Solarzelleneinheit sind nach innen geführt, so dass nur noch Anschlußarbeiten durchgeführt werden müssen, ohne dass eine Person das Dach betreten muss.

### Liste der Bezugszeichen

- 1: Klappdachmodul
- 2: Wandwange
- 3: Dachfläche
- 4: Firstbereich
- 5: Sparren
- 6: Firstbohlen
- 7: Traufbereich
- 8: Traufbrett
- 9: Gaubenwechsel
- 10: Sparrenstück
- 11: Dachflächenloch
- 12: Tragöse
- 13: Ausklinkung
- 14: Decke
- 15: Fußpfette
- 16: Gaube
- 17: Gaubenloch
- 18: Gaubendachelement
- 19: Gaubenrahmen
- 20: Gaubenwangen
- 21: Dachscharnier
- 22: Gaubensparren
- 23: Gaubenbrett
- 24: Gaubenbalken
- 25: Querbalken
- 26: Rahmen
- 27: Basis
- 28: Wangenscharnier
- 29: Tragebalken
- 30: Transportsicherung
- 31: Tragseil
- 32: Schwerpunkt
- 33: Modulscharnier
- 34: Scharnierbohlen
- 35: Trempelwand
- 36: Drehpunkt
- 37: Pfeil
- 38: Pfeil
- 39: Nagel
- 40: Pfeil
- 41: Latten
- 42: Dämmmaterial
- 43: freier Winkel
- 44: Untersichtverkleidung
- 45: Abschrägung
- 46: Traufsichtverkleidung
- 47: Konterlattung
- 48: Traglattung
- 49: Satteldachhälfte
- 50: Schrägsparren
- 51: Ständer
- 52: Schräge
- 53: Außenwand
- 54: Bolzen
- 55: Gewindebolzen
- 56: Sackbohrung
- 57: Spitze
- 58: Trauflüftungskammer
- 59: Unterspannbahn
- 60: Folie
- 61: Verkleidung
- 62: Dämmplatte
- 63: Dampfsperrfolie
- 64: Fermacellplatte
- 65: Pfettenschuh
- 66: Basisplatte
- 67: Dübelbefestigung
- 68: Schenkel
- 69: Holzschraube
- 70: Trempelscharnier
- 71: Verkleidungsplatte
- 72: Trempelrahmen
- 73: Rahmenwinkel
- 74: Ausfräsung
- 75: Firstbrett
- 76: Firstdämmung
- 77: Klebebänder
- 78: Überlappung
- 79: Distanzbrett
- 80: Dichtsparren
- 81: Abschrägung
- 82: Stoßausführung
- 83: Solarzelleneinheit
- 84: Mutter

## Patentansprüche

1. Vorgefertigtes Dach bzw. Dachmodul für ein Gebäude, welches aus zumindest zwei im Firstbereich (4) miteinander verbundenen Dachflächen (3) besteht, mit einer aus einer Trag- (48) und Konterlattung (47) bestehenden Gitterkonstruktion, auf der Dachplatten aufgebracht sind, **dadurch gekennzeichnet, dass** das Dach bzw. Dachmodul (1) als gesamtes Fertigbauteil aufklappbar ausgebildet ist, wobei die mindestens zwei Dachflächen (3) im Firstbereich (4) durch ein Scharniergelenk (33,34) aus einem vollständig zusammengeklappten Zustand in einen in einem bestimmten Winkel (43) aufgespreizten Zustand schwenkbar miteinander verbunden sind.

2. Dach bzw. Dachmodul nach Anspruch 1, **dadurch gekennzeichnet, dass** an der Traglattung (48) und/oder der Konterlattung (47) jeder Dachfläche (3) eine Einrichtung (12) zur Aufhängung an ein Hebezeug anbringbar ist.

3. Dach bzw. Dachmodul nach Anspruch 1 oder 2, **dadurch gekennzeichnet, dass** die Traglattung (48) der Dachfläche (3) aus einer Mehrzahl von beabstandeten Sparren (5) besteht, die im Traufbereich (7) mit an der Decke (14) eines Gebäudes befestigten Fußpfetten (15) verbindbar sind.

4. Dach bzw. Dachmodul nach einem der Ansprüche 1 bis 3, **dadurch gekennzeichnet, dass** die Sparren (5) der Traglattung (48) jeder Dachfläche (3) im Firstbereich (4) jeweils mit einem Firstbohlen (6) verbunden sind, wobei die aneinander grenzenden Firstbohlen (6) jeder Dachfläche (3) durch das Scharniergelenk (33,34) miteinander verbunden sind.

5. Dach bzw. Dachmodul nach einem der Ansprüche 1 bis 4, **dadurch gekennzeichnet, dass** die Firstbohlen (6) im zusammengeklappten Zustand der miteinander verbundenen Dachflächen (3) in einer derart geneigten Weise zueinander angeordnet sind, dass diese einen bestimmten Winkel (43) zueinander bilden, der im wesentlichen dem maximalen Aufklappwinkel der miteinander verbundenen Dachflächen (3) entspricht, wobei die Firstbohlen (6) im aufgespreizten Zustand in gegenseitige Anlage gelangen.

6. Dach bzw. Dachmodul nach einem der Ansprüche 1 bis 5, **dadurch gekennzeichnet, dass** dieses zwischen beabstandeten Wandwangen (2) des Gebäudes positioniert ist.

7. Dach bzw. Dachmodul nach einem der Ansprüche 1 bis 6, **dadurch gekennzeichnet, dass** dieses mit einem Dachfenster und/oder einer Gaube (16) und/oder einer Trempelwand (35) ausgerüstet ist.

8. Dach bzw. Dachmodul nach einem der Ansprüche 1 bis 7, **dadurch gekennzeichnet, dass** das Dachfenster und/oder der Gaubenrahmen (19) der Gaube (16) und/oder die Trempelwand (35) ausklappbar von der Dachfläche (3) ausgebildet sind.

9. Dach bzw. Dachmodul nach einem der Ansprüche 1 bis 8, **dadurch gekennzeichnet, dass** die Gaubendachelemente (18) der Gaube (16) vom Gaubenrahmen (19) und/oder der Dachfläche (3) ausklappbar ausgebildet sind.

10. Dach bzw. Dachmodul nach einem der Ansprüche 1 bis 9, **dadurch gekennzeichnet, dass** dieses mit regenerativen Energieerzeugungssystemen bestückt ist.

11. Dach bzw. Dachmodul nach einem der Ansprüche 1 bis 10, **dadurch gekennzeichnet, dass** dieses auf seiner Außenseite mit einem oder mehreren Solarzelleneinheiten (83) versehen ist.

12. Dach bzw. Dachmodul nach einem der Ansprüche 1 bis 11, **dadurch gekennzeichnet, dass** dieses mit einer Beplankung und einer Bespannung (59) sowie mit einer Wärmedämmung (42) und einer Dampfsperre (63) versehen ist.

13. Dach bzw. Dachmodul nach einem der Ansprüche 1 bis 12, **dadurch gekennzeichnet, dass** diese mit einer Dachbegrünung versehen ist.
